# EUROPEAN PATENT SPECIFICATION

(11) **EP 3 463 962 B1**
(45) Date of publication and mention of the grant of the patent: **09.06.2021**
(21) Application number: 17807004.1
(22) Date of filing: 31.05.2017
(51) Int. Cl.: B60K 23/02, B60K 23/00, F16F 15/04, F16K 15/02, F16K 27/02, G05G 1/30, F15B 21/00, F16D 48/02, F16F 9/34, F16L 55/04

(54) **APPARATUS FOR PREVENTING VIBRATION OF CLUTCH PEDAL FOR VEHICLE**
VORRICHTUNG ZUR VERHINDERUNG VON SCHWINGUNGEN EINES KUPPLUNGSPEDALS FÜR EIN FAHRZEUG
APPAREIL DE PRÉVENTION DE VIBRATION DE PÉDALE D'EMBRAYAGE POUR VÉHICULE

(30) Priority: 31.05.2016 KR 20160067482
(43) Date of publication of application: 10.04.2019
(73) Proprietor: Pyong Hwa Valeo Co., Ltd., Daegu 42701 (KR); Valeo Embrayages, Amiens 80009 (FR)
(72) Inventor: SHON, Byoung Chul, Dalseong-gun Daegu 42921 (KR); KIM, Se Young, Dalseong-gun Daegu 42921 (KR)
(74) Representative: Cardon, Nicolas
(86) International application number: PCT/KR2017/005687
(87) International publication number: WO 2017/209511

(56) References cited:
- EP-A2- 1 089 006
- FR-A1- 3 027 359
- JP-B2- 4 654 927
- JP-B2- 4 760 965
- KR-A- 20070 042 240
- KR-B1- 100 783 320
- KR-B1- 101 459 282
- KR-B1- 101 459 282
- US-A1- 2006 054 225

## Description

### Technical Field

Exemplary embodiments of the present invention relate to an apparatus for preventing a vibration of a clutch pedal for a vehicle, and more particularly, to an apparatus for preventing a vibration of a clutch pedal for a vehicle which is installed in a hydraulic supply line between the clutch pedal and a clutch to prevent an axial vibration generated from an engine from being transmitted to the clutch pedal via working oil.

### Background Art

Since an engine for a vehicle may not start while a load is applied and engine power should be blocked from being transmitted to a transmission for shifting while driving, a clutch for controlling the engine power is installed between the engine and the transmission.

The clutch is operated to be disengaged if a driver steps on a clutch pedal, and is operated to be engaged if the driver takes off the clutch pedal.

That is, a clutch disk pressurized by a pressure plate comes into close contact with a flywheel in a state in which a driver does not step on the clutch pedal to maintain a clutch connection state. If the driver steps on the clutch pedal, a clutch release cylinder (CRC) or a concentric slave cylinder (CSC) to which an oil pressure is transmitted from a clutch master cylinder (CMC) is operated and thus a diaphragm spring pulls the pressure plate, such that a clutch disc is spaced apart from the flywheel, thereby releasing the clutch connection state.

Meanwhile, an axial vibration generated from the engine is transmitted to the CRC/ CSC (in the present specification, "/" means 'or'), transmitted the CMC via oil filled in a hydraulic hose (or pipe) connecting between the CRC/CSC and the CMC, and finally transmitted to the clutch pedal connected to the CMC, which becomes a cause of decreasing clutch pedal manipulating feeling of a driver.

Therefore, in order to reduce the vibration transmitted to the clutch pedal, an apparatus for preventing a vibration of a clutch pedal is installed in an oil operating path, that is, the hydraulic line connecting between the CMC and the CRC/CSC.

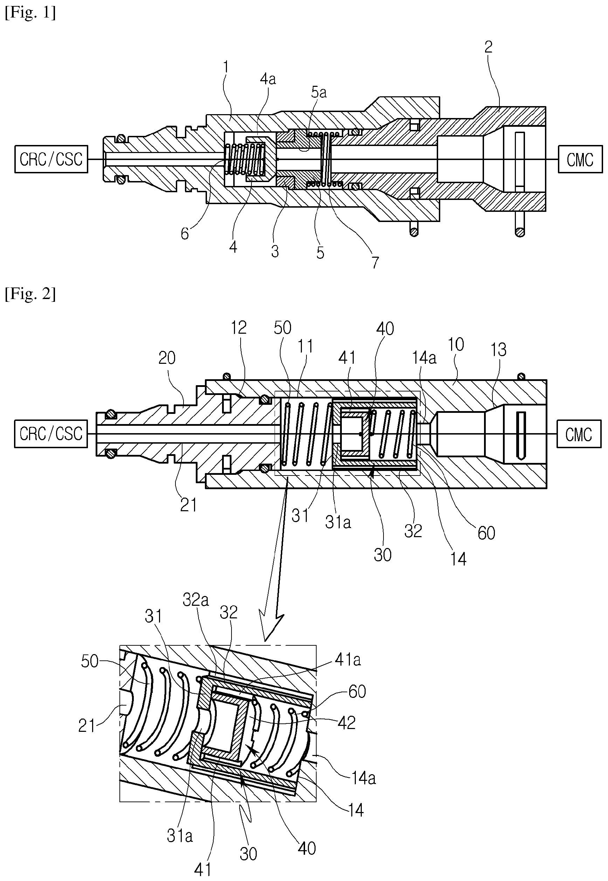

As illustrated in FIG. 1, the existing apparatus for preventing a vibration of a clutch pedal has a structure in which a stopper 3 is fixedly installed in an inner space of a connector body 1 and a valve piston 4 and a valve 5 at both sides of the stopper 3 are each pushed toward the stopper 3 by springs 6 and 7, respectively. An oil passage groove 4a is formed on an outer circumferential surface of the valve piston 4 in an axial direction (left and right direction in the drawing), and an oil passage hole 5a penetrating through a center in the same direction is formed in the valve 5.

Accordingly, if a driver steps on the clutch pedal, oil supplied from the CMC side pushes the valve piston 4 to open the oil passage groove 4a formed on the outer circumferential surface of the valve piston 4, such that the oil is supplied to the CRC/CSC side and the clutch is released and if the driver takes off the clutch pedal, reversely, oil returning through the oil passage groove 4a of the valve piston 4 pushes the valve 5 to open the oil passage hole 5a of the valve 5, such that the oil returns to the CMC side and the clutch also returns to an original state (connected state).

Further, in static states such as stepping on the clutch pedal or stepping on the clutch pedal and then stopping (half clutch state), the oil pressure on the CMC side and the oil pressure on the CRC/CSC side are balanced and thus both of the valve piston 4 and the valve 5 come into close contact with the stopper 3 and each other as shown in FIG. 1, such that the oil passage is blocked, thereby preventing the vibration from being transmitted from the CRC/CSC side to the CMC side via oil.

The above-mentioned related art is disclosed in Korean Patent No. 10-1459282.

However, the above-mentioned related art requires a large number of components such as the stopper 3, the valve piston 4, and the valve 5 as components for opening and closing the oil passage.

Further, the stopper 3 is fixed to the connector body 1 by ultrasonic welding. As a result, the number of assembling processes increases, and a product production cycle increases and cost increases accordingly.

Further, the ultrasonic welding may have a fundamental problem in that fixing strength or sealability is low and may have a problem in that the stopper 3 is not perpendicular to an inner diameter of the connector body 1 or excessively welded to cause a defect like being welded to the valve piston 4 and the valve 5.

### Disclosure of Invention

### Technical Problem

An object of the present invention is to provide an apparatus for preventing a vibration of a clutch pedal for a vehicle capable of reducing the number of components, reducing the number of processes, and solving various problems (poor fixing strength and sealability, defective fixed posture, excessive welding to peripheral components) due to defective ultrasonic welding, by not applying a stopper.

### Solution to Problem

In accordance with one aspect of the present invention, an apparatus for preventing a vibration of a clutch pedal for a vehicle comprises: a body having a component installation space formed therein; a valve piston installed in the component installation space, and having an end wall of a CRC/CSC side, the end wall provided with a first oil passage hole, and an outer circumferential surface provided with a first oil passage groove communicating both ends of the valve piston; a valve installed in the valve piston and having an end wall of a CMC side and an outer circumferential surface provided with a second oil passage groove communicating both ends of the valve; a first spring pushing the valve piston toward the CMC side to closely contact the valve piston with an end wall of the component installation space and to thereby block the first oil passage groove of the valve piston; and a second spring pushing the valve toward the CRC/CSC side to closely contact the valve with the end wall of the valve piston and to thereby block the second oil passage groove of the valve.

An end of the CRC/CSC side of the body is provided with a first connector insertion port and the first connector insertion port communicates with the component installation space without changing an inner diameter thereof.

A connector is inserted into the first connector insertion port of the CRC/CSC side, and one end of the first spring is supported with the connector and an other end is supported with the end wall of the valve piston.

An end of the CMC side of the body is provided with a second connector insertion port and the second connector insertion port communicates with the component installation space through a second oil passage hole formed on the end wall of the component installation space.

The second spring is inserted into the valve piston, and one end of the second spring is supported on the end wall of the component installation space and an other end of the second spring is supported with the end wall of the valve.

The first oil passage groove of the valve piston and the second oil passage groove of the valve are each formed in plural at equidistance along a circumferential direction of the valve piston and the valve.

A spring strength of the first spring is larger than a spring strength of the second spring.

The connector is provided with a third oil passage hole penetrating through a central shaft of the connector and communicating with the component installation space.

### Advantageous Effects of Invention

According to the present invention as described above, since the stopper is not used, the number of parts is reduced, such that the structure may be simplified.

Since the stopper is not used, it is not necessary to perform the ultrasonic welding process for fixing the stopper, such that the number of processes may be reduced and the production cycle time and the cost may be reduced accordingly.

Since the stopper ultrasonic welding process is not performed, it is possible to solve various problems such as the poor fixing strength and sealability, the defective fixing posture, and the unnecessary welding to peripheral components due to the defective ultrasonic welding.

### Brief Description of Drawings

FIG. 1 is a cross-sectional view of an apparatus for preventing a vibration of a clutch pedal for a vehicle according to the related art.
FIG. 2 is a cross-sectional view of an apparatus for preventing a vibration of a clutch pedal for a vehicle according to the present invention, and is a cross-sectional view of a static state in which the clutch pedal stops.
FIGS. 3 and 4 are cross-sectional views of a dynamic state in which the clutch pedal is operated, in which FIG. 3 is an operational state diagram while the clutch pedal is stepped on and FIG. 4 is an operational state diagram in which the clutch pedal returns.

### Mode for the Invention

The present invention may be modified in various ways and implemented by various exemplary embodiments, so that specific exemplary embodiments are shown in the drawings and will be described in detail. However, it is to be understood that the present invention is not limited to the specific exemplary embodiments, but includes all modifications, equivalents, and alternatives included in the spirit and the scope of the present invention. In the present description, thicknesses of lines, sizes of components, or the like, illustrated in the accompanying drawings may be exaggerated for clarity and convenience of explanation.

Further, the following terminologies are defined in consideration of the functions in the present invention and may be construed in different ways by intention of users and operators or precedents. Therefore, the definitions of terms used in the present description should be construed based on the contents throughout the specification.

Hereinafter, exemplary embodiments of the present will be described in detail with reference to the accompanying drawings.

As illustrated in FIG. 2, an apparatus for preventing a vibration of a clutch pedal for a vehicle according to the present invention includes a body 10, a connector 20, a valve piston 30, a valve 40, a first spring 50, a second spring 60.

The body 10 is a cylindrical component and has a cylindrical component installation space 11 formed therein, in which one side (CRC/CSC side direction) of the component installation space 11 is provided with a connector insertion port 12 into which the connector 20 is inserted and the other side (CMC side direction) thereof is provided with a connector insertion port 13 into which another connector for connection of the hose connected to the CMC is inserted.

The CRC/CSC side connector insertion port 12 communicates with the component installation space 11 without changing an inner diameter thereof and the CMC side connector insertion port 13 communicates with the component installation space 11 through the second oil hole 14a formed on the end wall 14 of the component installation space 11.

The connector 20 has a general shape used for connection of a hydraulic hose, and is provided with a third oil passage hole 21 penetrating through a central shaft thereof. The connector 20 serves to support one end of the first spring 50 to be described later and is assembled with the body 10 to configure the apparatus for preventing a vibration of a clutch pedal for a vehicle according to the present invention. The connector inserted into the CMC side connector insertion port 13 is only for connection of a hydraulic hose and is assembled when the device according to the present invention is installed on a hydraulic line but is not included in the device according to the present invention.

The valve piston 30 is inserted into the component installation space 11 of the body 10. The valve piston 30 is a cylindrical component and is manufactured to have an outer diameter very slightly smaller than an inner diameter of the component installation space 11 and may be freely moved along an axial direction (left and right direction in the drawing) of the component installation space 11 while getting a path guidance by an inner diameter surface of the component installation space 11. One end (CMC side surface) of the valve piston 30 is completely opened and the other end thereof (CRC/CSC side surface) is provided with an end wall 31, and a center of the end wall 31 is provided with a first oil passage hole 31a penetrating therethrough.

Further, an outer circumferential surface 32 of the valve piston 30 is provided with a linear first oil passage groove 32a over the entire axial direction.

The first oil passage groove 32a may be provided in plural at equidistance along a circumferential direction on the outer circumferential surface 32 of the valve piston 30 and both ends of the first oil passage grooves 32a are open to both sides of the valve piston 30.

The valve 40 is a cylindrical component having a short length and is manufactured to have an outer diameter very slightly smaller than an inner diameter of the valve piston 30 and may be freely moved along an axial direction (left and right direction in the drawing) of the valve piston 30 while getting a path guidance by an inner diameter surface of the valve piston 30. One end (CMC side) of the valve 40 is provided with an end wall 42 to be closed and the other end (CRC/CSC side) thereof is completely open.

Further, the plurality of second oil passage grooves 41a are formed on the outer circumferential surface 41 of the valve 40 in the same manner as the first oil passage grooves 32a of the valve piston 30. Both ends of the second oil passage groove 41a of the valve 40 are also open to both sides of the valve 40.

The first spring 50 is installed between the connector 20 and the valve piston 30 in the component installation space 11. That is, one end of the first spring 50 is supported by the connector 20 and the other end comes into contact with the valve piston 30. Therefore, the first spring 50 always pushes the valve piston 30 toward the CMC side, and therefore an opening end of the valve piston 30 comes into close contact with the end wall 14 (CMS side surface) of the component installation space 11 in a balance state (static state of the clutch pedal) between the CMC side pressure and the CRC/ CSC side pressure. In this state, an end of one side of the first oil passage groove 32a of the valve piston 30 is blocked to prevent oil from flowing.

The second spring 60 is inserted into an inner space of the valve piston 30. The valve 40 is first inserted into the inner space of the valve piston 30 and then the second spring 60 is inserted into the inner space of the valve piston 30. One end of the second spring 60 is supported by the end wall 14 of the component installation space 11 and the other end thereof comes into contact with the end wall 42 of the valve 40 to always push the valve 40 toward the CRC/CSC side. Therefore, the opening end of the valve 40 comes into close contact with an inner side surface of the end wall 31 of the valve piston 30. In this state, an end of one side of the second oil passage groove 41a of the valve 40 is blocked to prevent oil from flowing.

Hereinafter, the operation and effect of the present invention will be described.

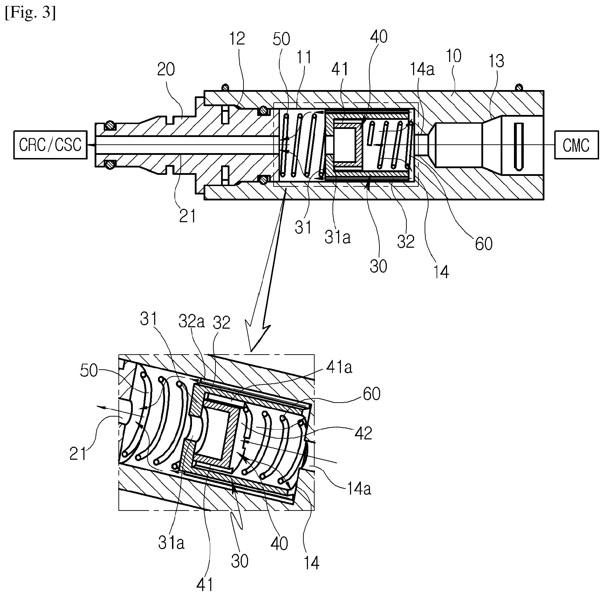

If a driver steps on the clutch pedal, as illustrated in FIG. 3, oil is supplied from the CMC to the inside of the body 10. Since the end wall 31 of the valve piston 30 comes into contact with the opening end of the valve 40, the valve 40 and the valve piston 30 move toward the CRC/CSC side while compressing the first spring 50 by the oil pressure acting on the end wall 42 of the valve 40. Therefore, the first oil passage groove 32a of the valve piston 30 is open while the opening end of the valve piston 30 is spaced apart from the end wall 14 of the component installation space 11. Therefore, oil moves to a space opposite to the valve piston 30 through the first oil passage groove 32a of the valve piston 30 and is then supplied to the CRC/CSC side through the third oil passage hole 21 of the connector 20, such that the CRC/CSC is operated to release the clutch.

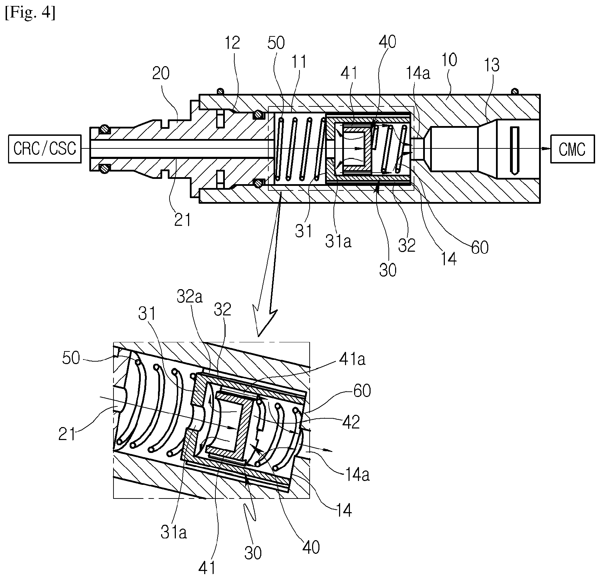

As illustrated in FIG. 4, the oil returning from the CRC/CSC is introduced into the body 10 while a driver takes off the clutch pedal (while the clutch pedal returns). Oil enters the inner space of the valve piston 30 through the first oil passage hole 31a formed on the end wall 31 of the valve piston 30 to push the valve 40 toward the CMC side. If the opening end of the valve 40 is spaced apart from the end wall 31 of the valve piston 30 while the valve 40 is pushed toward the CMC side, the second oil passage groove 41a of the valve 40 is open, such that oil moves in a direction opposite to the valve 40 through the second oil passage groove 41a and then is discharged through the second oil passage hole 14a of the body 10 to return to the CMC side. Therefore, the clutch is reconnected while the CRC/CSC is released.

Meanwhile, when the return of the clutch pedal completely ends, while a driver steps on the clutch pedal, and when the driver takes off and then stops (half clutch state), as illustrated in FIG. 2, the oil pressure on the CMC side and the oil pressure on the CRC/ CSC side are balanced. At this time, since the valve piston 30 is pushed toward the CMC side by the first spring 50 so that the opening end of the valve piston 30 comes into contact with the end wall 14 of the component installation space 11, the first oil passage groove 32a of the valve piston 30 is blocked and since the valve 40 is pushed toward the CRC/CMC side by the second spring 60 so that the opening end of the valve 40 comes into contact with the end wall 31 of the valve piston 30, the second oil passage groove 41a of the valve 40 is blocked.

Therefore, since the flow of oil is blocked, the axial vibration transmitted from the engine may not be transmitted through the oil and may not be transmitted to the clutch pedal, such that a driver may not feel the vibration due to the axial vibration of the engine in the clutch pedal.

In order to block both of the first oil passage groove 32a of the valve piston 30 and the second oil passage groove 41a of the valve 40 in the oil pressure balance state as described above, the opening end of the valve piston 30 needs to be in close contact with the end wall 14 of the component installation space 11 and the opening end of the valve 40 needs to be in close contact with the end wall 31 of the valve piston 30. For the operation, the spring strength of the first spring 50 and the second spring 60 needs to be larger than that of the second spring 60. If the spring strength of the first spring 50 is equal to or smaller than that of the second spring 60, the valve spring 30 is spaced apart from the end wall 14 of the component installation space 11 to open the first oil passage groove 32a, such that the communication of the oil may be made and the transmission of vibration may not be blocked.

As described above, according to the present invention, only the first spring 50 and the second spring 60, which support the valve piston 30 and the valve 40 and each of them, are provided in the body 10, and blocks the flow of oil between the CMC side and the CRC/CSC side in the static state in which the clutch pedal does not move, such that the function of transmitting the axial vibration of the engine may be performed normally. Therefore, it is not necessary to use the existing stopper.

By not using the stopper, the number of components may be reduced and the internal structure of the device may be simplified.

In addition, there is no need to perform the ultrasonic welding process for fixing the position of the stopper by not using the stopper, such that the number of manufacturing processes may be reduced, the production cycle time may be reduced, and the required cost may be reduced.

In addition, there is an effect of fundamentally solving the problems such as the badness of the stopper fixing position and posture and unnecessary welding of the stopper and peripheral components which occur during the ultrasonic welding process.

Although the embodiments of the present invention have been described in detail as described above, they are only examples. It will be appreciated by those skilled in the art that various modifications and equivalent other embodiments are possible within the scope defined by the appended claims.

## Claims

1. An apparatus for preventing a vibration of a clutch pedal for a vehicle, comprising:
a body (10) having a component installation space (11) formed therein;
a valve piston (30) installed in the component installation space (11), and having an end wall (31) of a CRC/CSC side, the end wall (31) of a CRC/CSC side provided with a first oil passage hole (31a), and an outer circumferential surface provided with a first oil passage groove (32a) communicating both ends of the valve piston (30);
a valve (40) installed in the valve piston (30), and having an end wall (42) of a CMC side and an outer circumferential surface provided with a second oil passage groove (41a) communicating both ends of the valve (40);
a first spring (50) pushing the valve piston (30) toward the CMC side to closely contact the valve piston (30) with an end wall (14) of the component installation space (11) and to thereby block the first oil passage groove (32a) of the valve piston (30); and
a second spring (60) pushing the valve (40) toward the CRC/CSC side to closely contact the valve (40) with the end wall (31) of a CRC/CSC side of the valve piston (30) and to thereby block the second oil passage groove (41a) of the valve (40).

2. The apparatus of claim 1, wherein an end of the CRC/CSC side of the body (10) is provided with a first connector insertion port (12) and the first connector insertion port (12) communicates with the component installation space (11) without changing an inner diameter thereof.

3. The apparatus of claim 2, wherein a connector (20) is inserted into the first connector insertion port (12) of the CRC/CSC side, and one end of the first spring (50) is supported with the connector (20) and an other end is supported the valve piston with the end wall (31a) of a CRC/CSC side of (30).

4. The apparatus of claim 1, wherein an end of the CMC side of the body (10) is provided with a second connector insertion port (13) and the second connector insertion port (13) communicates with the component installation space (11) through a second oil passage hole (14a) formed on the end wall (14) of the component installation space (11).

5. The apparatus of claim 1, wherein the second spring (60) is inserted into the the valve piston (30), and one end of the second spring (60) is supported on the end wall (31) of the component installation space (11) and an other end of the second spring (60) is supported with the end wall (42) of the valve (40).

6. The apparatus of claim 1, wherein the first oil passage groove (32a) of the valve piston (30) and the second oil passage groove (41a) of the valve (40) are each formed in plural at equidistance along a circumferential direction of the valve piston (30) and the valve (40).

7. The apparatus of claim 1, wherein a spring strength of the first spring (50) is larger than a spring strength of the second spring (60).

8. The apparatus of claim 3, wherein the connector (20) is provided with a third oil passage hole (21) penetrating through a central shaft of the connector (20) and communicating with the component installation space (11).

## Patentansprüche

1. Vorrichtung zur Verhinderung von Schwingungen eines Kupplungspedals für ein Fahrzeug, umfassend:
einen Körper (10) mit einem darin ausgebildeten Komponenteneinbauraum (11);
einen Ventilkolben (30), der in dem Komponenteneinbauraum (11) installiert ist und eine Stirnwand (31) einer CRC/CSC-Seite aufweist, wobei die Stirnwand (31) einer CRC/CSC-Seite mit einem ersten Öldurchlassloch (31a) versehen ist, und eine äußere Umfangsfläche aufweist, die mit einer ersten Öldurchlassrinne (32a) versehen ist, die beide Enden des Ventilkolbens (30) verbindet;
ein Ventil (40), das in dem Ventilkolben (30) installiert ist und eine Stirnwand (42) einer CMC-Seite und eine äußere Umfangsfläche aufweist, die mit einer zweiten Öldurchlassrinne (41a) versehen ist, die die beiden Enden des Ventils (40) verbindet;
eine erste Feder (50), die den Ventilkolben (30) in Richtung der CMC-Seite drückt, um den Ventilkolben (30) mit einer Stirnwand (14) des Komponenteneinbauraums (11) eng in Kontakt zu bringen und dadurch die erste Öldurchlassrinne (32a) des Ventilkolbens (30) zu blockieren; und
eine zweite Feder (60), die das Ventil (40) in Richtung der CRC/CSC-Seite drückt, um das Ventil (40) eng mit der Stirnwand (31) einer CRC/CSC-Seite des Ventilkolbens (30) in Kontakt zu bringen und dadurch die zweite Öldurchlassrinne (41a) des Ventils (40) zu blockieren.

2. Vorrichtung gemäß Anspruch 1, wobei ein Ende der CRC/CSC-Seite des Körpers (10) mit einer ersten Verbindungsstückeinsatzöffnung (12) versehen ist und die erste Verbindungsstückeinsatzöffnung (12) mit dem Komponenteneinbauraum (11) verbunden ist, ohne einen Innendurchmesser davon zu ändern.

3. Vorrichtung gemäß Anspruch 2, wobei ein Verbindungsstück (20) in die erste Verbindungsstückeinsatzöffnung (12) der CRC/CSC-Seite eingeführt ist und ein Ende der ersten Feder (50) mit dem Verbindungsstück (20) und ein anderes Ende mit der Stirnwand (31a) einer CRC/CSC-Seite des Ventilkolbens (30) gehalten wird.

4. Vorrichtung gemäß Anspruch 1, wobei ein Ende der CMC-Seite des Körpers (10) mit einer zweiten Verbindungsstückeinsatzöffnung (13) versehen ist und die zweite Verbindungsstückeinsatzöffnung (13) mit dem Komponenteneinbauraum (11) über ein zweites Öldurchlassloch (14a) verbunden ist, das an der Stirnwand (14) des Komponenteneinbauraums (11) ausgebildet ist.

5. Vorrichtung gemäß Anspruch 1, wobei die zweite Feder (60) in den Ventilkolben (30) eingesetzt ist und ein Ende der zweiten Feder (60) an der Stirnwand des Komponenteneinbauraums (11) gehalten und ein anderes Ende der zweiten Feder (60) an der Stirnwand (42) einer CMC-Seite des Ventils (40) gehalten wird.

6. Vorrichtung gemäß Anspruch 1, wobei die erste Öldurchlassrinne (32a) des Ventilkolbens (30) und die zweite Öldurchlassrinne (41a) des Ventils (40) jeweils in einer Vielzahl in gleichem Abstand entlang einer Umfangsrichtung des Ventilkolbens (30) und des Ventils (40) ausgebildet sind.

7. Vorrichtung gemäß Anspruch 1, wobei eine Federstärke der ersten Feder (50) größer als eine Federstärke der zweiten Feder (60) ist.

8. Vorrichtung gemäß Anspruch 3, wobei das Verbindungsstück (20) mit einem dritten Öldurchlassloch (21) versehen ist, das durch einen zentralen Schaft des Verbindungsstücks (20) hindurchgeht und mit dem Komponenteneinbauraum (11) verbunden ist.

## Revendications

1. Appareil pour empêcher une vibration d'une pédale d'embrayage pour un véhicule, comprenant :
un corps (10) dans lequel est ménagé un espace (11) d'installation de composant ;
un piston (30) de soupape installé dans l'espace (11) d'installation de composant et doté d'une paroi d'extrémité (31) d'un côté CRC/CSC, la paroi d'extrémité (31) d'un côté CRC/CSC étant pourvue d'un premier trou (31a) de passage d'huile, et d'une surface circonférentielle extérieure pourvue d'une première rainure (32a) de passage d'huile mettant en communication les deux extrémités du piston (30) de soupape ;
une soupape (40) installée dans le piston (30) de soupape et dotée d'une paroi d'extrémité (42) d'un côté CMC et d'une surface circonférentielle extérieure pourvue d'une deuxième rainure (41a) de passage d'huile mettant en communication les deux extrémités de la soupape (40) ;
un premier ressort (50) poussant le piston (30) de soupape vers le côté CMC pour amener le piston (30) de soupape au contact intime d'une paroi d'extrémité (14) de l'espace (11) d'installation de composant et pour bloquer de cette manière la première rainure (32a) de passage d'huile du piston (30) de soupape ; et
un deuxième ressort (60) poussant la soupape (40) vers le côté CRC/CSC pour amener la soupape (40) au contact intime de la paroi d'extrémité (31) d'un côté CRC/CSC du piston (30) de soupape et pour bloquer de cette manière la deuxième rainure (41a) de passage d'huile de la soupape (40).

2. Appareil selon la revendication 1, dans lequel une extrémité du côté CRC/CSC du corps (10) est pourvue d'un premier orifice (12) d'introduction de raccord et le premier orifice (12) d'introduction de raccord communique avec l'espace (11) d'installation de composant sans en modifier le diamètre intérieur.

3. Appareil selon la revendication 2, dans lequel un raccord (20) est introduit dans le premier orifice (12) d'introduction de raccord du côté CRC/CSC, et une extrémité du premier ressort (50) est supportée par le raccord (20) et une autre extrémité est supportée par la paroi d'extrémité (31a) d'un côté CRC/CSC du piston (30) de soupape.

4. Appareil selon la revendication 1, dans lequel une extrémité du côté CMC du corps (10) est pourvue d'un deuxième orifice (13) d'introduction de raccord et le deuxième orifice (13) d'introduction de raccord communique avec l'espace (11) d'installation de composant au travers d'un deuxième trou (14a) de passage d'huile ménagé sur la paroi d'extrémité (14) de l'espace (11) d'installation de composant.

5. Appareil selon la revendication 1, dans lequel le deuxième ressort (60) est introduit dans le piston (30) de soupape, et une extrémité du deuxième ressort (60) est supportée sur la paroi d'extrémité de l'espace (11) d'installation de composant et une autre extrémité du deuxième ressort (60) est supportée par la paroi d'extrémité (42) d'un côté CMC de la soupape (40).

6. Appareil selon la revendication 1, dans lequel la première rainure (32a) de passage d'huile du piston (30) de soupape et la deuxième rainure (41a) de passage d'huile de la soupape (40) sont chacune ménagées en pluralité à équidistance suivant une direction circonférentielle du piston (30) de soupape et de la soupape (40).

7. Appareil selon la revendication 1, dans lequel une force de ressort du premier ressort (50) est plus importante qu'une force de ressort du deuxième ressort (60) .

8. Appareil selon la revendication 3, dans lequel le raccord (20) est pourvu d'une troisième trou (21) de passage d'huile traversant un axe central du raccord (20) et communiquant avec l'espace (11) d'installation de composant.
